# EUROPEAN PATENT SPECIFICATION

(11) **EP 3 960 604 B1**
(45) Date of publication and mention of the grant of the patent: **21.02.2024**
(21) Application number: 21192940.1
(22) Date of filing: 25.08.2021
(51) Int. Cl.: B62K 19/18, B62K 11/10

(54) **SCOOTER TYPE VEHICLE**
ROLLERARTIGES FAHRZEUG
VÉHICULE DE TYPE SCOOTER

(30) Priority: 27.08.2020 JP 2020143476
(43) Date of publication of application: 02.03.2022
(73) Proprietor: Yamaha Hatsudoki Kabushiki Kaisha, Iwata-shi, Shizuoka 438-8501 (JP)
(72) Inventor: Kawaguchi, Tsutomu, Iwata-shi, Shizuoka, 438-8501 (JP); Tsukamoto, Mitsuharu, Iwata-shi, Shizuoka, 438-8501 (JP)
(74) Representative: Grünecker Patent- und Rechtsanwälte PartG mbB

(56) References cited:
- EP-A1- 1 707 484
- WO-A1-2020/115772
- JP-A- H 107 062
- JP-A- 2000 103 378
- JP-A- 2005 186 814

## Description

The present invention relates to a scooter type vehicle according to the preamble of independent claim 1. Such a scooter type vehicle can be taken from the prior art document JP 2005 186814 A.

A scooter type vehicle includes a head pipe that supports a steering shaft so that the steering shaft can rotate left and right, a down frame extending downward from the head pipe, a lower frame extending rearward from the lower end portion of the down frame, a seat frame extending rearward and upward from the rear end of the lower frame, a footboard arranged upward of the lower frame, a seat arranged on the seat frame, and a power unit supported on the lower frame or the seat frame so that the power unit can pivot up and down.

JP 2016-16736 A describes a scooter type vehicle of which the lower frame and the seat frame are formed by a single pipe. With such a scooter type vehicle, there is no need to connect the lower frame and the seat frame.

Now, with a scooter type vehicle, the lower frame needs to be stronger than the seat frame. With a scooter type vehicle in which the lower frame and the seat frame are formed by a single pipe, the outer diameter and the wall thickness of the pipe are designed so as to meet the strength required for the lower frame. Thus, the seat frame becomes larger and heavier than necessary.

JP 2006-96203 A describes a scooter type vehicle in which the lower frame and seat frame are formed by separate pipes, and the lower end portion of the seat frame is welded to the rear end of the lower frame. Thus, with the lower frame and the seat frame being separate from each other, the outer diameter or the wall thickness of the seat frame can be reduced. Therefore, it is possible to reduce the size and the weight of the seat frame.

However, when the lower frame and the seat frame are separate from each other, there is a need for a connecting portion at the rear end of the lower frame for the connection with the lower end portion of the seat frame. There is a need to ensure a sufficient area for the connecting portion at the rear end of the lower frame. Therefore, the length in the front-rear direction of the footboard arranged upward of the lower frame needs to be shortened, thereby resulting in a smaller footrest space for the rider.

International Publication WO 2005/063559 A1 describes a scooter type vehicle in which the rear end of the lower frame is extended rearward and the extended portion is used as a part of the connecting portion with the seat frame. With such a scooter type vehicle, it is expected that it is possible to ensure a sufficient area for the connecting portion without having to shorten the length of the footboard in the front-rear direction. extension of the lower frame. In order to avoid such interference, the pivot shaft needs to be arranged more rearward. However, if the pivot shaft is arranged more rearward, the length of the vehicle body in the front-rear direction increases, resulting in a larger size of the vehicle body.

An object of the present invention is to provide a scooter type vehicle that has a smaller size and a lighter weight with increased the connection strength between the first lower frame and the first seat frame while ensuring a sufficient footrest space. According to the present invention said object is solved by a scooter type vehicle having the features of independent claim 1. Preferred embodiments are laid down in the dependent claims.

A scooter type vehicle disclosed herein includes a body frame including a head pipe, a down frame extending downward from the head pipe, a first lower frame extending rearward from the down frame, and a first seat frame extending rearward and upward from the first lower frame. The scooter type vehicle includes a seat arranged upward of the first seat frame; a footboard arranged forward of the seat and upward of the first lower frame on which feet of a rider seated on the seat are rested; a pivot shaft attached to the first lower frame or the first seat frame; and a power unit pivotally supported on the pivot shaft. The first lower frame and the first seat frame are formed as separate parts. The first lower frame includes a main connecting portion connected to a lower end surface of the first seat frame, and a rear extension located rearward relative to the main connecting portion. A lower end of a rear edge of the rear extension is located forward relative to an upper end of a rear edge of the rear extension.

With the scooter type vehicle set forth above, the first lower frame and the first seat frame are formed as separate parts. The outer diameter and the wall thickness of the first seat frame do not need to match with the outer diameter and the wall thickness of the first lower frame. Since it is possible to reduce the outer diameter or the wall thickness of the first seat frame, it is possible to reduce the size and the weight of the first seat frame. With the scooter type vehicle set forth above, the first lower frame includes a rear extension. Therefore, it is possible to ensure a sufficient area for the connecting portion of the first lower frame for the connection with the first seat frame without having to reduce the dimension of the footboard in the front-rear direction. Since there is no need to reduce the dimension of the footboard in the front-rear direction, it is possible to ensure a sufficient footrest space. With the scooter type vehicle set forth above, the lower end of the rear edge of the rear extension is located forward relative to the upper end of the rear edge. Even when the power unit pivots about the pivot shaft, the power unit is unlikely to interfere with the rear extension. The pivot shaft does not need to be arranged more rearward in order to avoid interference between the power unit and the rear extension. Therefore, it is possible to avoid an increase in the size of the scooter type vehicle. Therefore, with the scooter type vehicle set forth above, it is possible to reduce the size and the weight while ensuring a sufficient footrest space.

The lower end of the rear edge of the rear extension may be located forward relative to a virtual plane that passes through an upper end of the rear edge of the rear extension and be perpendicular to an axial line of the first lower frame.

As the vehicle is viewed from the side, the rear edge of the rear extension may be inclined upward relative to a horizontal line while extending rearward.

According to a preferred embodiment, an outer diameter of the first seat frame is smaller than an outer diameter of the first lower frame.

According to the embodiment set forth above, it is possible to reduce the size of the first seat frame.

According to a preferred embodiment, first seat frame is made of a pipe whose wall thickness is smaller than the pipe of the first lower frame.

According to the embodiment set forth above, it is possible to reduce the weight of the first seat frame.

According to a preferred embodiment, the scooter type vehicle includes a rear reinforcement member connected to a portion of the first lower frame that is rearward of the main connecting portion and to the first seat frame.

According to the embodiment set forth above, the first seat frame is connected to the rear extension of the first lower frame via the rear reinforcement member. The rear extension is used as a part of the connecting portion of the first lower frame for the connection with the first seat frame. With the rear reinforcement member, it is possible to further increase the connection strength between the first lower frame and the first seat frame while ensuring a sufficient footrest space.

According to a preferred embodiment, the rear extension of the first lower frame includes a rear connecting portion connected to the rear reinforcement member. The lower end of the rear edge of the rear extension is located forward relative to a rear end of the rear connecting portion.

According to the embodiment set forth above, it is possible to easily avoid interference between the power unit and the rear extension while ensuring a sufficient footrest space and increasing the connection strength between the first lower frame and the first seat frame.

According to a preferred embodiment, the scooter type vehicle includes a front reinforcement member connected to a portion of the first lower frame that is forward of the main connecting portion and to the first seat frame.

According to the embodiment set forth above, with the front reinforcement member, it is possible to further increase the connection strength between the first lower frame and the first seat frame.

According to the present invention, the first lower frame is made of a pipe; and the scooter type vehicle includes an internal reinforcement member that is arranged inside the first lower frame and rearward relative to a front end of the main connecting portion.

Accordingly, with the internal reinforcement member, it is possible to increase the strength of the rear extension of the first lower frame. Thus, it is possible to increase the connection strength between the first lower frame and the first seat frame.

According to a preferred embodiment, a center of the pivot shaft is located forward relative to a rear end of the main connecting portion of the first lower frame.

According to the embodiment set forth above, the pivot shaft is arranged relatively forward. As compared with a case where the pivot shaft is arranged relatively rearward, it is possible to reduce the dimension of the vehicle body in the front-rear direction. Thus, it is possible to reduce the size of the vehicle body.

According to a preferred embodiment, the scooter type vehicle includes a storage box that is arranged downward of the seat and overlaps with a portion of the first seat frame as the vehicle is viewed from the side.

According to the embodiment set forth above, by reducing the width of the first seat frame, it is possible to increase the lateral width of the storage box. Therefore, it is possible to increase the capacity of the storage box.

According to a preferred embodiment, the power unit includes an internal combustion engine. The scooter type vehicle includes a rear wheel arranged rearward relative to the pivot shaft, and an exhaust pipe connected to the internal combustion engine. The exhaust pipe includes a sideward portion arranged sideward of the rear wheel. The first lower frame, the first seat frame and the sideward portion of the exhaust pipe are arranged on one of a right side and a left side of a vehicle center line.

According to the embodiment set forth above, it is possible to reduce the size and the weight of the scooter type vehicle while ensuring a sufficient footrest space, while avoiding interference between the rear extension of the first lower frame and the exhaust pipe.

According to a preferred embodiment, the body frame includes a second lower frame extending rearward from the down frame and a second seat frame extending rearward and upward from the second lower frame. The first lower frame and the first seat frame are arranged on one of a right side and a left side of the vehicle center line. The second lower frame and the second seat frame are arranged on the other one of the right side and the left side of the vehicle center line. The second lower frame and the second seat frame are formed as an integral part by a single frame.

According to the embodiment set forth above, since the first lower frame and the first seat frame support a relatively large load, it is possible to reduce the load to be applied to the second lower frame and the second seat frame. It is possible to reduce the outer diameter or the wall thickness of the second lower frame and the second seat frame. Therefore, it is possible to reduce the size and the weight of the second lower frame and the second seat frame.

According to a preferred embodiment, the power unit includes an internal combustion engine and a transmission. The scooter type vehicle includes a rear wheel arranged rearward relative to the pivot shaft, and an exhaust pipe connected to the internal combustion engine. The exhaust pipe includes a sideward portion arranged sideward of the rear wheel. The first lower frame, the first seat frame and the sideward portion of the exhaust pipe are arranged on one of the right side and the left side of the vehicle center line. The second lower frame, the second seat frame and the transmission are arranged on the other one of the right side and the left side of the vehicle center line.

According to the embodiment set forth above, it is possible to reduce the size and the weight of the scooter type vehicle while ensuring a sufficient footrest space, while avoiding interference between the rear extension of the first lower frame and the exhaust pipe.

According to a preferred embodiment, the scooter type vehicle includes a fan for cooling the power unit. The first lower frame, the first seat frame and the fan are arranged on one of a right side and a left side of the vehicle center line.

According to the embodiment set forth above, it is possible to reduce the size and the weight of the scooter type vehicle while ensuring a sufficient footrest space, while avoiding interference between the rear extension of the first lower frame and the fan.

### Advantageous Effects Of Invention

According to the present invention, it is possible to provide a scooter type vehicle that has a smaller size and a lighter weight while ensuring a sufficient footrest space.

### BRIEF DESCRIPTION OF THE DRAWINGS

FIG. 1 is a right side view showing a scooter type vehicle according to an embodiment.
FIG. 2 is a right side view showing a body frame.
FIG. 3 is a plan view showing the body frame.
FIG. 4 is a partial cross-sectional view showing a right lower frame and a right seat frame.
FIG. 5 is a right side view showing a part of the scooter type vehicle.
FIG. 6 is a left side view showing a part of the scooter type vehicle.
FIG. 7 is a right side view showing a part of a body frame of a scooter type vehicle according to another embodiment.

### DETAILED DESCRIPTION OF THE PREFERRED EMBODIMENTS

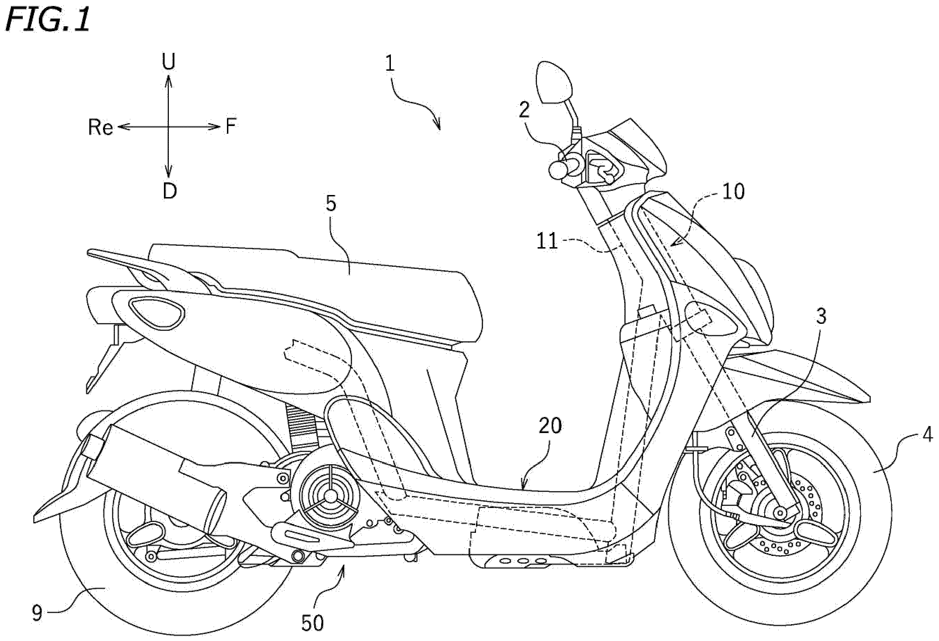

An embodiment will now be described with reference to the drawings. FIG. 1 is a right side view showing a scooter type vehicle (hereinafter referred to as a "scooter") 1 according to the present embodiment.

The terms front, rear, left, right, up and down, as used in the description below, refer to these directions as seen from a virtual rider (not shown) seated on a seat 5 while the scooter 1 is standing upright on a horizontal surface with no rider and no load thereon, unless specified otherwise. Accordingly, it is referred to the front-rear direction of the vehicle, the up-down direction of the vehicle and left-right direction of the vehicle. The designations F, Re, L, R, U and D, as used in the figures, refer to front, rear, left, right, up and down, respectively.

The scooter 1 includes a body frame 10, the seat 5 for seating the rider, a footboard 20 on which the feet of the rider seated on the seat 5 are rested, a power unit 50, a front wheel 4, a handle 2 for steering the front wheel 4, and a rear wheel 9 driven by the power unit 50.

The front wheel 4 is supported on the lower end portion of a shift fork 3. A steering shaft (not shown) is connected to an upper portion of the shift fork 3. The handle 2 is secured to an upper portion of the steering shaft.

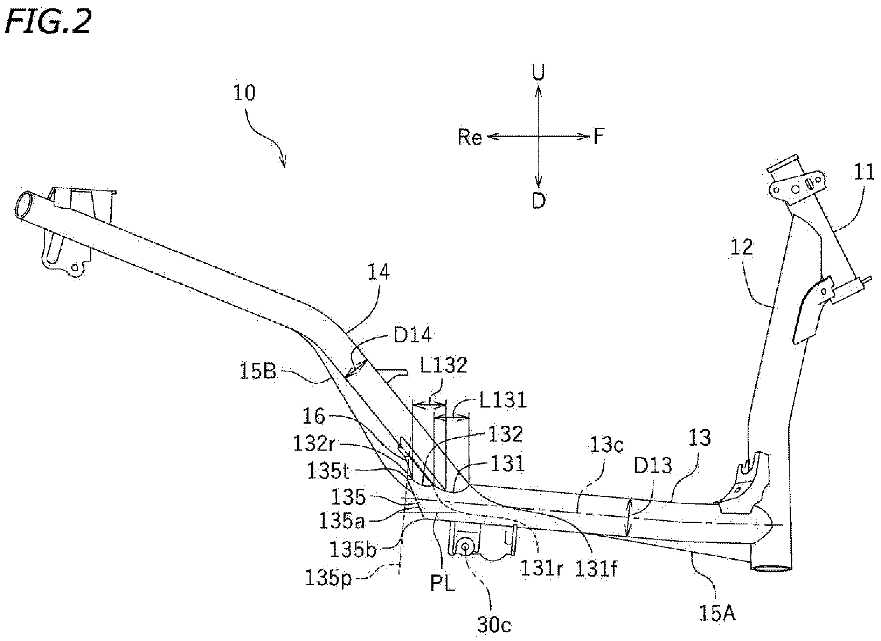

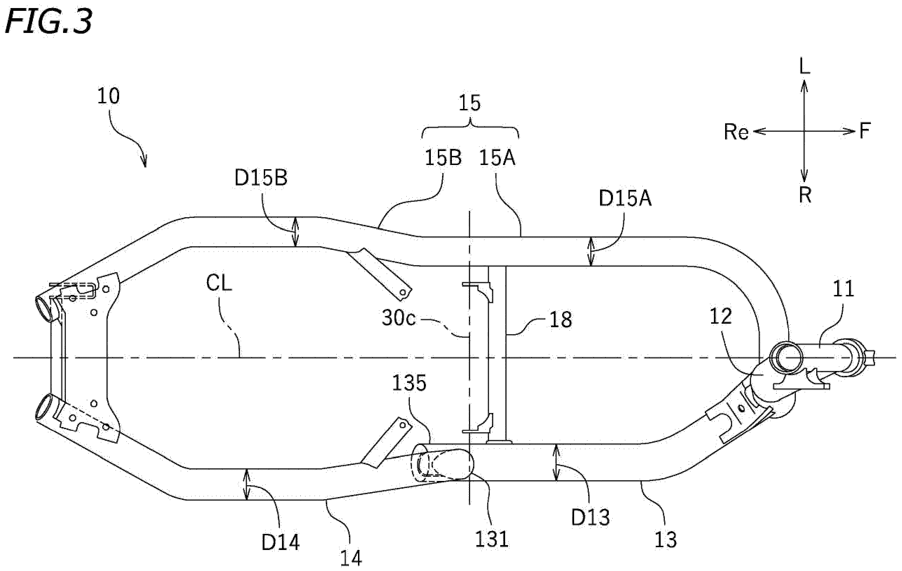

FIG. 2 is a right side view showing the body frame 10. FIG. 3 is a plan view showing the body frame 10. As shown in FIG. 2, the body frame 10 includes a head pipe 11, a down frame 12 extending downward from the head pipe 11, a right lower frame 13 extending rearward from the down frame 12, and a right seat frame 14 extending rearward and upward from the right lower frame 13. As shown in FIG. 3, the body frame 10 includes a left lower frame 15A extending rearward from the down frame 12, and a left seat frame 15B extending rearward and upward from the left lower frame 15A. As shown in FIG. 2, the right lower frame 13 is the only frame that connects the down frame 12 and the right seat frame 14. There is no other frame bridging from the down frame 12 to the right seat frame 14 above the right lower frame 13.

The steering shaft is inserted into the head pipe 11. The head pipe 11 supports the steering shaft so that the steering shaft can rotate left and right.

While the down frame 12 extends downward from the head pipe 11 as described above, the term "downward" as used herein refers not only to the vertically downward direction as the vehicle is viewed from the side but also to any direction that is inclined from such a direction by less than 90 degrees in the front-rear direction. While the right lower frame 13 and the left lower frame 15A extend rearward from the down frame 12, the term "rearward" as used herein refers not only to the direction extending rearward along the vehicle center line CL as the vehicle is viewed from above but also to any direction that is inclined from such a direction by less than 90 degrees in the left-right direction.

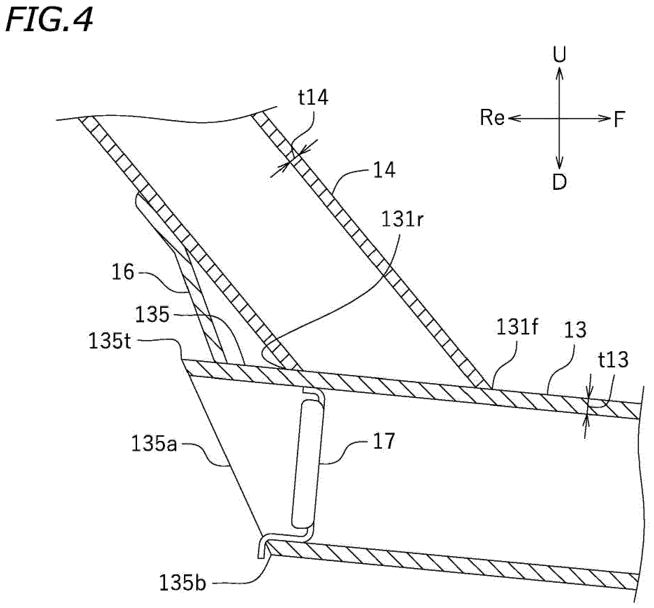

As shown in FIG. 2, the right lower frame 13 and the right seat frame 14 are formed as separate parts. The right lower frame 13 and the right seat frame 14 are formed by separate components. Here, the right lower frame 13 and the right seat frame 14 are formed by separate pipes. The right lower frame 13 is made of a pipe, and the right seat frame 14 is made of a pipe whose wall thickness is smaller than the pipe of the right lower frame 13. The wall thickness t14 of the right seat frame 14 is smaller than the wall thickness t13 of the right lower frame 13 (see FIG. 4). t14<t13. The outer diameter D14 of the right seat frame 14 is smaller than the outer diameter D13 of the right lower frame 13. D14<D13.

The right lower frame 13 is connected to the right seat frame 14. Here, the right lower frame 13 is connected by welding to the right seat frame 14. The right lower frame 13 includes a main connecting portion 131 that is connected to the lower end surface of the right seat frame 14. Reference sign L131 in FIG. 2 denotes the length in the front-rear direction of the main connecting portion 131.

A portion of the right lower frame 13 is extended rearward relative to the main connecting portion 131. The right lower frame 13 includes a rear extension 135 that is located rearward relative to the main connecting portion 131. Reference sign 135a denotes the rear edge of the rear extension 135. As the vehicle is viewed from the side, the rear edge 135a extends rearward and upward. The rear edge 135a is inclined upward relative to the horizontal line PL while extending rearward. The lower end 135b of the rear edge 135a is located forward relative to an upper end 135t of the rear edge 135a. In FIG. 2, the broken line 135p represents a virtual plane that passes through an upper end 135t of the rear edge 135a and is perpendicular to the axial line 13c of the right lower frame 13. The lower end 135b of the rear edge 135a is located forward relative to the virtual plane 135p.

The rear reinforcement member 16 is connected to a portion of the right lower frame 13 that is rearward of the main connecting portion 131 and to the right seat frame 14. The rear reinforcement member 16 is arranged between the right seat frame 14 and the rear extension 135 of the right lower frame 13. Here, the rear reinforcement member 16 is welded to the right seat frame 14 and the rear extension 135 of the right lower frame 13. The rear extension 135 of the right lower frame 13 includes the rear connecting portion 132 connected to the rear reinforcement member 16. Reference sign L132 in FIG. 2 denotes the length of the rear connecting portion 132 in the front-rear direction. The lower end 135b of the rear edge 135a is located forward relative to a rear end 132r of the rear connecting portion 132.

As shown in FIG. 4, the internal reinforcement member 17 is provided inside the right lower frame 13. The internal reinforcement member 17 is formed in a disc shape. The internal reinforcement member 17 is arranged rearward relative to a front end 131f of the main connecting portion 131 of the right lower frame 13. The internal reinforcement member 17 may reinforce the main connecting portion 131 of the right lower frame 13 or may reinforce the rear connecting portion 132.

As shown in FIG. 3, the left lower frame 15A and the left seat frame 15B are formed as an integral member. The left lower frame 15A and the left seat frame 15B are formed as an integral part by a single frame. Here, the left lower frame 15A and the left seat frame 15B are formed by a single pipe 15. The outer diameter D15A of the left lower frame 15A and the outer diameter D15B of the left seat frame 15B are equal to each other. The wall thickness of the left lower frame 15A and the wall thickness of the left seat frame 15B are equal to each other. In the present embodiment, the outer diameter D15A of the left lower frame 15A and the outer diameter D15B of the left seat frame 15B are equal to the outer diameter D14 of the right seat frame 14. D15A=D15B=D14. The wall thickness of the left lower frame 15A and the wall thickness of the left seat frame 15B are equal to the wall thickness of the right seat frame 14. The outer diameter D15A of the left lower frame 15A is smaller than the outer diameter D13 of the right lower frame 13, and the wall thickness of the left lower frame 15A is smaller than the wall thickness of the right lower frame 13.

The cross member 18 extending in the left-right direction is connected to the left lower frame 15A and the right lower frame 13. The cross member 18 bridges from the left lower frame 15A to the right lower frame 13. Here, the cross member 18 is arranged forward relative to the main connecting portion 131 of the right lower frame 13. Note however that there is no limitation thereto.

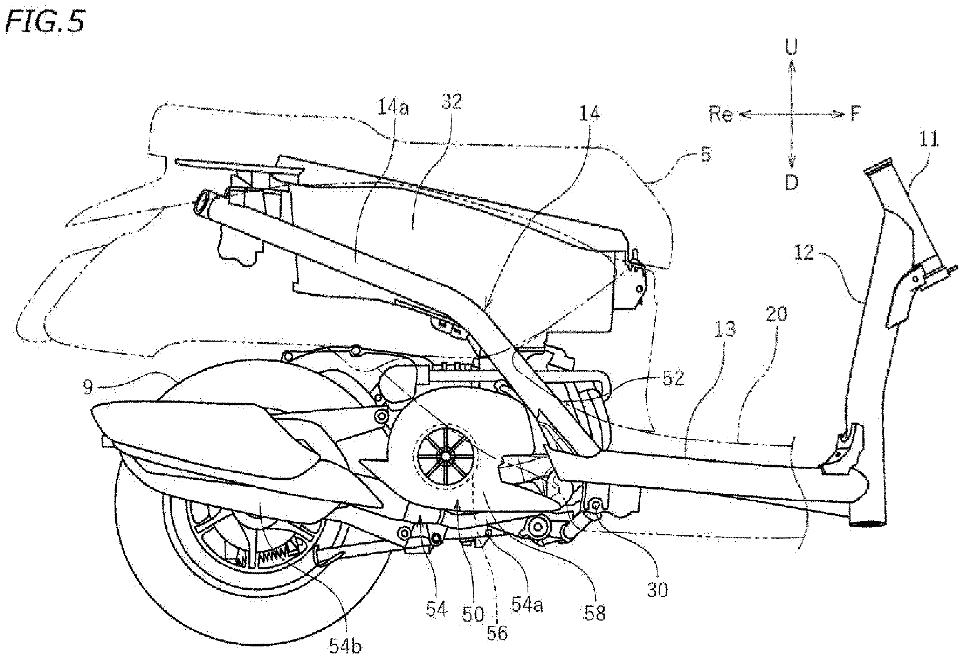

As shown in FIG. 5, a storage box 32 is arranged upward of the power unit 50. The storage box 32 is arranged downward of the seat 5. As the vehicle is viewed from the side, the storage box 32 overlaps a portion 14a of the right seat frame 14. A portion of the storage box 32 is arranged between the left seat frame 15B and the right seat frame 14.

The pivot shaft 30 is attached to the right lower frame 13 and the left lower frame 15A. The power unit 50 is supported on the pivot shaft 30 so that the power unit 50 can pivot up and down. The power unit 50 is pivotally supported on the body frame 10 via the pivot shaft 30. As shown in FIG. 2, a center 30c of the pivot shaft 30 is located forward relative to a rear end 131r of the main connecting portion 131 of the right lower frame 13.

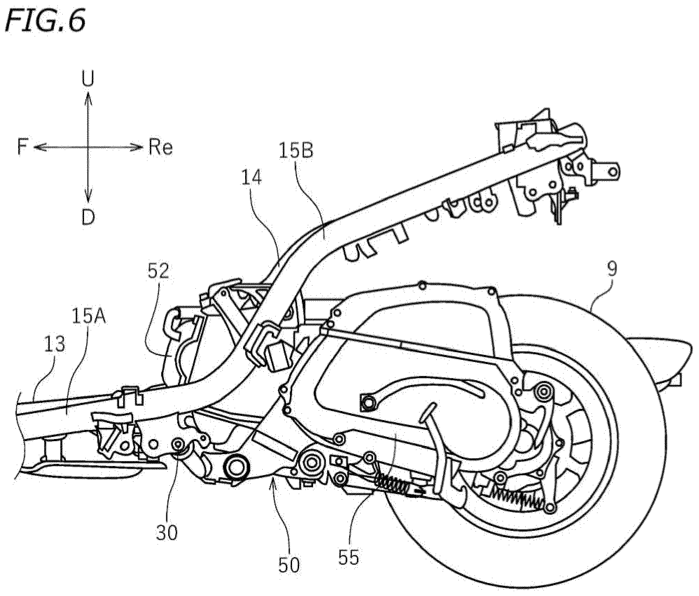

As shown in FIG. 5, the power unit 50 includes an internal combustion engine 52. As shown in FIG. 6, the power unit 50 includes a transmission 55, which is a belt-type continuously variable transmission. The transmission 55 is connected to the internal combustion engine 52 and the rear wheel 9. Note that the transmission 55 is arranged rearward relative to the pivot shaft 30. The rear wheel 9 is arranged rearward relative to the pivot shaft 30.

As shown in FIG. 5, an exhaust pipe 54 is connected to the internal combustion engine 52. The exhaust pipe 54 includes a pipe 54a extending rearward from the internal combustion engine 52, and a silencer 54b connected to the pipe 54a. The silencer 54b is arranged sideward of the rear wheel 9. The silencer 54b is an example of the "sideward portion of the exhaust pipe". In the present embodiment, the right lower frame 13, the right seat frame 14 and the silencer 54b are arranged rightward of the vehicle center line CL (see FIG. 3). The left lower frame 15A, the left seat frame 15B and the transmission 55 are arranged leftward of the vehicle center line CL.

A fan 56 for cooling the power unit 50 is arranged rightward of the power unit 50. A fan cover 58 is arranged around the fan 56. The fan cover 58 covers the fan 56. In the present embodiment, the right lower frame 13, the right seat frame 14 and the fan 56 are arranged rightward of the vehicle center line CL.

The scooter 1 is configured as described above. Next, various effects that are realized by the scooter 1 according to the present embodiment will be described.

With the scooter 1 according to the present embodiment, the right lower frame 13 and the right seat frame 14 are formed as separate parts. There is no need to match the outer diameter D14 and the wall thickness t14 of the right seat frame 14 with the outer diameter D13 and the wall thickness t13 of the right lower frame 13. Thus, it is possible to reduce the outer diameter D14 or the wall thickness t14 of the right seat frame 14. Therefore, it is possible to reduce the size and the weight of the right seat frame 14.

The right lower frame 13 includes the rear extension 135. Therefore, it is possible to ensure a sufficient area for the connecting portion of the right lower frame 13 for the connection with the right seat frame 14 without having to reduce the dimension of the footboard 20 in the front-rear direction. Therefore, it is possible to ensure a sufficient area of the footboard 20. It is possible to ensure a sufficient footrest space of the scooter 1.

Now, with the scooter 1, the power unit 50 pivots up and down about the pivot shaft 30. There is a concern that the power unit 50 may interfere with the rear extension 135 of the right lower frame 13. In order to avoid the interference, the pivot shaft 30 may be arranged more rearward. However, if the pivot shaft 30 is arranged more rearward, it will increase the dimension of the scooter 1 in the front-rear direction. In the present embodiment, however, the lower end 135b of the rear edge 135a of the rear extension 135 is located forward relative to the upper end 135t. The rear edge 135a of the rear extension 135 extends rearward and upward. Therefore, even when the power unit 50 pivots, the power unit 50 is unlikely to interfere with the rear extension 135. With the scooter 1 according to the present embodiment, the pivot shaft 30 does not need to be arranged more rearward in order to avoid interference between the power unit 50 and the rear extension 135. Therefore, it is possible to avoid an increase in the size of the scooter 1.

As described above, the scooter 1 according to the present embodiment has a smaller size and a lighter weight while ensuring a sufficient footrest space. It is possible to realize the scooter 1 having a large footrest space while being small in size.

According to the present embodiment, as shown in FIG. 2, the right lower frame 13 and the right seat frame 14 are connected together by the main connecting portion 131 and by the rear reinforcement member 16. That is, the right seat frame 14 is connected to the rear extension 135 of the right lower frame 13 via the rear reinforcement member 16. The rear extension 135 is used as a part of the connecting portion of the right lower frame 13 for the connection with the right seat frame 14. According to the present embodiment, it is possible to increase the connection strength between the right lower frame 13 and the right seat frame 14 while ensuring a sufficient footrest space.

The rear extension 135 of the right lower frame 13 includes the rear connecting portion 132 connected to the rear reinforcement member 16, and the lower end 135b of the rear edge 135a of the rear extension 135 is located forward relative to the rear end 132r of the rear connecting portion 132. Therefore, it is possible to easily avoid interference between the power unit 50 and the rear extension 135 while ensuring a sufficient footrest space and increasing the connection strength between the right lower frame 13 and the right seat frame 14.

In the present embodiment, as shown in FIG. 4, the right lower frame 13 is made of a pipe, and the internal reinforcement member 17 is arranged inside the right lower frame 13 and rearward relative to the front end 131f of the main connecting portion 131. Thus, it is possible to increase the strength of the right lower frame 13 while ensuring a sufficient footrest space. As the strength of the right lower frame 13 is increased, it is possible to improve the connection strength between the right lower frame 13 and the right seat frame 14.

According to the present embodiment, as shown in FIG. 2, the center 30c of the pivot shaft 30 is located forward relative to the rear end 131r of the main connecting portion 131 of the right lower frame 13. The pivot shaft 30 is arranged relatively forward. Thus, as compared with a case where the pivot shaft 30 is arranged relatively rearward, it is possible to suppress the dimension of the scooter 1 in the front-rear direction. Therefore, it is possible to reduce the size of the scooter 1.

According to the present embodiment, the storage box 32 overlaps with the portion 14a of the right seat frame 14 as the vehicle is viewed from the side as shown in FIG. 5. The storage box 32 is arranged sideward of the portion 14a of the right seat frame 14. As described above, the outer diameter D14 of the right seat frame 14 is smaller than the outer diameter D13 of the right lower frame 13. According to the present embodiment, since the right seat frame 14 is thin, it is possible to increase the lateral width of the storage box 32. Therefore, it is possible to increase the capacity of the storage box 32.

In the present embodiment, the right lower frame 13, the right seat frame 14 and the silencer 54b of the exhaust pipe 54 are arranged rightward of the vehicle center line CL. Since the exhaust pipe 54 is connected to the internal combustion engine 52 of the power unit 50, the exhaust pipe 54 pivots about the pivot shaft 30. There is a concern about interference between the pipe 54a of the exhaust pipe 54 and the rear extension 135 of the right lower frame 13. However, as described above, the rear edge 135a of the rear extension 135 extends rearward and upward. Therefore, according to the present embodiment, it is possible to easily avoid interference between the rear extension 135 of the right lower frame 13 and the exhaust pipe 54.

According to the present embodiment, the fan 56 for cooling the power unit 50 is arranged rightward of the rear wheel 9. The fan 56 and the fan cover 58 covering the fan 56 are supported on the power unit 50. The fan 56 and the fan cover 58 pivot, together with the power unit 50, about the pivot shaft 30. There is a concern about interference between the fan 56 or the fan cover 58 and the rear extension 135 of the right lower frame 13. However, the rear edge 135a of the rear extension 135 extends rearward and upward. Thus, according to the present embodiment, it is possible to easily avoid interference between the rear extension 135 of the right lower frame 13 and the fan 56 and the fan cover 58.

According to the present embodiment, the right lower frame 13 and the right seat frame 14 are separate parts that are connected to each other, whereas the left lower frame 15A and the left seat frame 15B are formed as an integral part by a single pipe 15. As described above, since the connection strength between the right lower frame 13 and the right seat frame 14 is high, and the right lower frame 13 and the right seat frame 14 are capable of supporting a relatively large load. Accordingly, it is possible to reduce the load to be applied to the left lower frame 15A and the left seat frame 15B. Thus, it is possible to reduce the outer diameter or the wall thickness of the left lower frame 15A and the left seat frame 15B. It is possible to reduce the size and the weight of the left lower frame 15A and the left seat frame 15B.

While one embodiment has been described above, the embodiment is merely an example, and various other embodiments are possible. Next, other example embodiments will be described briefly.

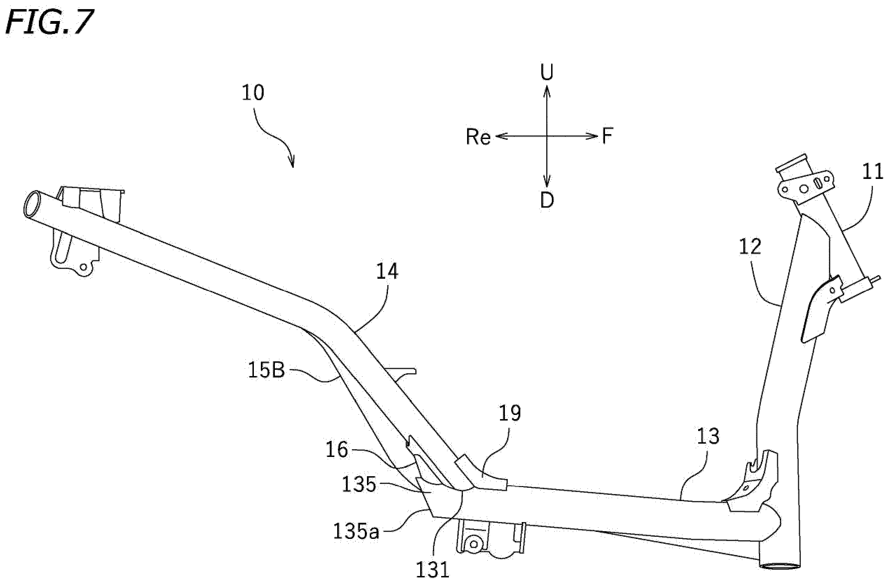

As shown in FIG. 7, a front reinforcement member 19 may be provided forward of the right seat frame 14. That is, the scooter 1 may include the front reinforcement member 19 that is connected to a front portion of the main connecting portion 131 of the right lower frame 13 and the right seat frame 14. Thus, it is possible to further increase the connection strength between the right lower frame 13 and the right seat frame 14.

Note however that the front reinforcement member 19 may be absent as long as a sufficient connection strength between the right lower frame 13 and the right seat frame 14 is ensured. The rear reinforcement member 16 may be absent as long as the connection strength between the right lower frame 13 and the right seat frame 14 is ensured.

The outer diameter D14 of the right seat frame 14 may be equal to the outer diameter D13 of the right lower frame 13 or may be greater than the outer diameter D13 of the right lower frame 13.

The wall thickness t14 of the right seat frame 14 may be equal to the wall thickness t13 of the right lower frame 13 or may be greater than the wall thickness t13 of the right lower frame 13.

The right seat frame 14 is not limited to a pipe and may be a solid bar. The left lower frame 15A and the left seat frame 15B are not limited to pipes but may be solid bars.

According to the embodiment described above, the lower end 135b of the rear edge 135a of the rear extension 135 of the right lower frame 13 is located forward relative to the rear end 132r of the rear connecting portion 132 as shown in FIG. 2. Note however that there is no limitation thereto. The lower end 135b of the rear edge 135a does not need to be located forward relative to the rear end 132r of the rear connecting portion 132.

The position of the center 30c of the pivot shaft 30 may be the same as the position of the rear end 131r of the main connecting portion 131 of the right lower frame 13 for the vehicle front-rear direction. The center 30c of the pivot shaft 30 may be located rearward relative to the rear end 131r of the main connecting portion 131 of the right lower frame 13.

The storage box 32 downward of the seat 5 does not need to overlap with the right seat frame 14 as the vehicle is viewed from the side. The storage box 32 downward of the seat 5 may be absent.

In the embodiment described above, the right lower frame 13 and the right seat frame 14 are separate parts that are connected to each other, whereas the left lower frame 15A and the left seat frame 15B are formed as an integral part. That is, a "first lower frame" and a "first seat frame", which are separate parts that are connected to each other, are arranged rightward of the vehicle center line CL, whereas a "second lower frame" and a "second seat frame", which are formed as an integral part, are arranged leftward of the vehicle center line CL. Note however that there is no limitation thereto. Alternatively, the "first lower frame" and the "first seat frame", which are separate parts that are connected to each other, may be arranged leftward of the vehicle center line CL, whereas the "second lower frame" and the "second seat frame", which are formed as an integral part, may be arranged rightward of the vehicle center line CL.

The "first lower frame" and the "first seat frame", which are separate parts that are connected to each other, may be arranged leftward of the vehicle center line CL, and the silencer 54b of the exhaust pipe 54 may be further arranged leftward of the vehicle center line CL.

The "first lower frame" and the "first seat frame", which are separate parts that are connected to each other, may be arranged leftward of the vehicle center line CL, and the fan 56 may be further arranged leftward of the vehicle center line CL.

The "first lower frame" and the "first seat frame", which are separate parts that are connected to each other, and the silencer 54b of the exhaust pipe 54 may be arranged leftward of the vehicle center line CL, whereas the "second lower frame" and the "second seat frame", which are formed as an integral part, and the transmission 55 may be arranged rightward of the vehicle center line CL.

The left lower frame 15A and the left seat frame 15B do not need to be formed as an integral part. As are the right lower frame 13 and the right seat frame 14, the left lower frame 15A and the left seat frame 15B may be formed as separate parts that are connected to each other. The configuration of the left lower frame 15A and the left seat frame 15B may be similar to the configuration of the right lower frame 13 and the right seat frame 14.

In the embodiment described above, the pivot shaft 30 is attached to the right lower frame 13 and the left lower frame 15A. Note however that there is no limitation thereto. The pivot shaft 30 may be attached to the right seat frame 14 and the left seat frame 15B. Reference Signs List

1: Scooter type vehicle, 5: Seat, 9: Rear wheel, 10: Body frame, 11: Head pipe, 12: Down frame, 13: Right lower frame (first lower frame), 14: Right seat frame (first seat frame), 15A: Left lower frame (second lower frame), 15B: Left seat frame (second seat frame), 16: Rear reinforcement member, 17: Internal reinforcement member, 19: Front reinforcement member, 20: Footboard, 30: Pivot shaft, 32: Storage box, 50: Power unit, 52: Internal combustion engine, 54: Exhaust pipe, 54b: Silencer (sideward portion), 55: Transmission, 56: Fan, 131: Main connecting portion, 132: Rear connecting portion, 135: Rear extension, 135a: Rear edge, 135b: Lower end of rear edge, 135t: Upper end of rear edge, 135p: Virtual plane, CL: Vehicle center line, PL: Horizontal line

## Claims

1. A scooter type vehicle (1) comprising:
a body frame (10) including a head pipe (11), a down frame (12) extending downward from the head pipe (11), a first lower frame (13) made of a pipe extending rearward in front-rear direction of the vehicle from the down frame (12), and a first seat frame (14) extending rearward in front-rear direction of the vehicle and upward from the first lower frame (13) in up-down direction of the vehicle;
a seat (5) arranged upward of the first seat frame (14);
a footboard (20) arranged forward of the seat (5) in front-rear direction of the vehicle and upward of the first lower frame (13) in up-down direction of the vehicle, the footboard (20) is configured to rest feet of a rider seated on the seat (5);
a pivot shaft (30) attached to the first lower frame (13) or the first seat frame (14); and
a power unit (50) pivotally supported on the pivot shaft (30), wherein:
the first lower frame (13) and the first seat frame (14) are formed as separate parts;
the first lower frame (13) includes a main connecting portion (131) connected to a lower end surface of the first seat frame (14), and a rear extension (135) located rearward in front-rear direction of the vehicle relative to the main connecting portion (131), wherein a lower end (135b) of a rear edge (135a) of the rear extension (135) is located forward in front-rear direction of the vehicle relative to an upper end (135t) of a rear edge (135a) of the rear extension (135), **characterized in that** the scooter type vehicle includes an internal reinforcement member (17) that is arranged inside the first lower frame (13) and rearward relative to a front end (131f) of the main connecting portion (131) in front-rear direction of the vehicle.

2. The scooter type vehicle (1) according to claim 1, **characterized in that** the lower end (135b) of the rear edge (135a) of the rear extension (135) is located forward relative to a virtual plane (135p) in front-rear direction of the vehicle that passes through an upper end (135t) of the rear edge (135a) of the rear extension (135) and is perpendicular to an axial line (13c) of the first lower frame (13).

3. The scooter type vehicle (1) according to claim 1 or 2, **characterized in that** as the vehicle is viewed from the side, the rear edge (135a) of the rear extension (135) is inclined upward relative to a horizontal line (PL) in up-down direction of the vehicle while extending rearward in front-rear direction of the vehicle.

4. The scooter type vehicle (1) according to any one of claims 1 to 3, **characterized in that** an outer diameter (D14) of the first seat frame (14) is smaller than an outer diameter (D13) of the first lower frame (13).

5. The scooter type vehicle (1) according to any one of claims 1 to 4, **characterized in that** the first seat frame (14) is made of a pipe whose wall thickness is smaller than the pipe of the first lower frame (13).

6. The scooter type vehicle (1) according to any one of claims 1 to 5, **characterized by** a rear reinforcement member (16) connected to a portion of the first lower frame (13) that is rearward of the main connecting portion (131) in front-rear direction of the vehicle and to the first seat frame (14).

7. The scooter type vehicle (1) according to claim 6, **characterized in that** the rear extension (135) of the first lower frame (13) includes a rear connecting portion (132) connected to the rear reinforcement member (16); and
the lower end (135b) of the rear edge (135a) of the rear extension (135) is located forward relative to a rear end (132r) of the rear connecting portion (132) in front-rear direction of the vehicle.

8. The scooter type vehicle (1) according to any one of claims 1 to 7, **characterized by** a front reinforcement member (19) connected to a portion of the first lower frame (13) that is forward of the main connecting portion (131) in front-rear direction of the vehicle and to the first seat frame (14).

9. The scooter type vehicle (1) according to any one of claims 1 to 8, **characterized in that** a center (30c) of the pivot shaft (30) is located forward relative to a rear end (131r) of the main connecting portion (131) of the first lower frame (13) in front-rear direction of the vehicle.

10. The scooter type vehicle (1) according to any one of claims 1 to 9, **characterized by** a storage box (32) that is arranged downward of the seat (5) in up-down direction of the vehicle and overlaps with a portion (14a) of the first seat frame (14) as the vehicle is viewed from the side.

11. The scooter type vehicle (1) according to any one of claims 1 to 10, **characterized in that** the power unit (50) includes an internal combustion engine (52);
the scooter type vehicle (1) includes a rear wheel (9) arranged rearward relative to the pivot shaft (30) in front-rear direction of the vehicle;
the scooter type vehicle (1) includes an exhaust pipe (54) connected to the internal combustion engine (52);
the exhaust pipe (54) includes a sideward portion (54b) arranged sideward of the rear wheel (9) in left-right direction of the vehicle; and
the first lower frame (13), the first seat frame (14) and the sideward portion (54b) of the exhaust pipe (54) are arranged on one of a right side and a left side of a vehicle center line (CL) in left-right direction of the vehicle.

12. The scooter type vehicle (1) according to any one of claims 1 to 10, **characterized in that** the body frame (10) includes a second lower frame (15A) extending rearward from the down frame (12) in front-rear direction of the vehicle and a second seat frame (15B) extending rearward in front-rear direction of the vehicle and upward from the second lower frame (15A) in up-down direction of the vehicle;
the first lower frame (13) and the first seat frame (14) are arranged on one of a right side and a left side of the vehicle center line (CL) in left-right direction of the vehicle; the second lower frame (15A) and the second seat frame (15B) are arranged on the other one of the right side and the left side of the vehicle center line (CL) in left-right direction of the vehicle; and
the second lower frame (15A) and the second seat frame (15B) are formed as an integral part by a single frame (15).

13. The scooter type vehicle (1) according to claim 12, **characterized in that** the power unit (50) includes an internal combustion engine (52) and a transmission (55);
the scooter type vehicle (1) includes a rear wheel (9) arranged rearward relative to the pivot shaft (30) in front-rear direction of the vehicle;
the scooter type vehicle (1) includes an exhaust pipe (54) connected to the internal combustion engine (52);
the exhaust pipe (54) includes a sideward portion (54b) arranged sideward of the rear wheel (9) in left-right direction of the vehicle;
the first lower frame (13), the first seat frame (14) and the sideward portion (54b) of the exhaust pipe (54) are arranged on one of the right side and the left side of the vehicle center line (CL) in left-right direction of the vehicle; and
the second lower frame (15A), the second seat frame (15B) and the transmission (55) are arranged on the other one of the right side and the left side of the vehicle center line (CL) in left-right direction of the vehicle.

14. The scooter type vehicle (1) according to any one of claims 1 to 13, **characterized by** a fan (56) for cooling the power unit (50),
wherein the first lower frame (13), the first seat frame (14) and the fan (56) are arranged on one of a right side and a left side of the vehicle center line (CL) in left-right direction of the vehicle.

## Patentansprüche

1. Ein Motorroller-Typ-Fahrzeug (1), das umfasst:
einen Körperrahmen (10), der ein Kopfrohr (11), einen Unter-Rahmen (12), der sich von dem Kopfrohr (11) nach unten erstreckt, einen ersten unteren Rahmen (13), der aus einem Rohr gemacht ist, das sich von dem Unter-Rahmen (12) nach hinten in Vorder-Rück-Richtung des Fahrzeugs erstreckt, und einen ersten Sitzrahmen (14), der sich nach hinten in Vorder-Rück-Richtung des Fahrzeugs und nach oben von dem ersten unteren Rahmen (13) in Auf-Ab-Richtung des Fahrzeugs erstreckt, enthält;
einen Sitz (5), der oberhalb des ersten Sitzrahmens (14) angeordnet ist;
ein Trittbrett (20), das vor dem Sitz (5) in Vorder-Rück-Richtung des Fahrzeugs und oberhalb des ersten unteren Rahmens (13) in Auf-Ab-Richtung des Fahrzeugs angeordnet ist, das Trittbrett (20) ist konfiguriert, um die Füße eines Fahrers, der auf dem Sitz (5) sitzt, abzulegen;
eine Schwenkwelle (30), die am ersten unteren Rahmen (13) oder am ersten Sitzrahmen (14) angebracht ist; und
eine Antriebseinheit (50), die schwenkbar an der Schwenkwelle (30) gelagert ist, wobei:
der erste untere Rahmen (13) und der erste Sitzrahmen (14) als separate Teile ausgebildet sind;
der erste untere Rahmen (13) einen Hauptverbindungsabschnitt (131), der mit einer unteren Endfläche des ersten Sitzrahmens (14) verbunden ist, und eine hintere Verlängerung (135), die relativ zu dem Hauptverbindungsabschnitt (131) in Vorder-Rück-Richtung des Fahrzeugs nach hinten angeordnet ist, enthält, wobei ein unteres Ende (135b) einer Hinterkante (135a) der hinteren Verlängerung (135) relativ zu einem oberen Ende (135t) einer Hinterkante (135a) der hinteren Verlängerung (135) in Vorder-Rück-Richtung des Fahrzeugs nach vorne angeordnet ist, **dadurch gekennzeichnet, dass** das Motorroller-Typ-Fahrzeug ein inneres Verstärkungselement (17) enthält, das innerhalb des ersten unteren Rahmens (13) und relativ zu einem vorderen Ende (131f) des Hauptverbindungsabschnitts (131) in der Vorder-Rück-Richtung des Fahrzeugs nach hinten angeordnet ist.

2. Das Motorroller-Typ-Fahrzeug (1) gemäß Anspruch 1, **dadurch gekennzeichnet, dass** das untere Ende (135b) der Hinterkante (135a) der hinteren Verlängerung (135) in Bezug auf eine virtuelle Ebene (135p) in Vorder-Rück-Richtung des Fahrzeugs, die durch ein oberes Ende (135t) der Hinterkante (135a) der hinteren Verlängerung (135) verläuft und senkrecht zu einer axialen Linie (13c) des ersten unteren Rahmens (13) ist, nach vorne angeordnet ist.

3. Das Motorroller-Typ-Fahrzeug (1) gemäß Anspruch 1 oder 2, **dadurch gekennzeichnet, dass** bei Betrachtung des Fahrzeugs von der Seite die Hinterkante (135a) der hinteren Verlängerung (135) relativ zu einer horizontalen Linie (PL) in Auf-Ab-Richtung des Fahrzeugs nach oben geneigt ist, während sie sich in Vorder-Rück-Richtung des Fahrzeugs nach hinten erstreckt.

4. Das Motorroller-Typ-Fahrzeug (1) gemäß irgendeinem der Ansprüche 1 bis 3, **dadurch gekennzeichnet, dass** ein Außendurchmesser (D14) des ersten Sitzrahmens (14) kleiner ist als ein Außendurchmesser (D13) des ersten unteren Rahmens (13).

5. Das Motorroller-Typ-Fahrzeug (1) gemäß irgendeinem der Ansprüche 1 bis 4, **dadurch gekennzeichnet, dass** der erste Sitzrahmen (14) aus einem Rohr gemacht ist, dessen Wandstärke geringer ist als das Rohr des ersten unteren Rahmens (13).

6. Das Motorroller-Typ-Fahrzeug (1) gemäß irgendeinem der Ansprüche 1 bis 5, **gekennzeichnet durch** ein hinteres Verstärkungselement (16), das mit einem Abschnitt des ersten unteren Rahmens (13), der in Vorder-Rück-Richtung des Fahrzeugs hinter dem Hauptverbindungsabschnitt (131) ist, und mit dem ersten Sitzrahmen (14) verbunden ist.

7. Das Motorroller-Typ-Fahrzeug (1) gemäß Anspruch 6, **dadurch gekennzeichnet, dass** die hintere Verlängerung (135) des ersten unteren Rahmens (13) einen hinteren Verbindungsabschnitt (132) enthält, der mit dem hinteren Verstärkungselement (16) verbunden ist; und
das untere Ende (135b) der Hinterkante (135a) der hinteren Verlängerung (135) relativ zu einem hinteren Ende (132r) des hinteren Verbindungsabschnitts (132) in Vorder-Rück-Richtung des Fahrzeugs nach vorne angeordnet ist.

8. Das Motorroller-Typ-Fahrzeug (1) gemäß irgendeinem der Ansprüche 1 bis 7, **gekennzeichnet durch** ein vorderes Verstärkungselement (19), das mit einem Abschnitt des ersten unteren Rahmens (13), der in Vorder-Rück-Richtung des Fahrzeugs vor dem Hauptverbindungsabschnitt (131), und mit dem ersten Sitzrahmen (14) verbunden ist.

9. Das Motorroller-Typ-Fahrzeug (1) gemäß irgendeinem der Ansprüche 1 bis 8, **dadurch gekennzeichnet, dass** eine Mitte (30c) der Schwenkwelle (30) in Bezug auf ein hinteres Ende (131r) des Hauptverbindungsabschnitts (131) des ersten unteren Rahmens (13) in Vorder-Rück-Richtung des Fahrzeugs vorne angeordnet ist.

10. Das Motorroller-Typ-Fahrzeug (1) gemäß irgendeinem der Ansprüche 1 bis 9, **gekennzeichnet durch** eine Aufbewahrungsbox (32), die in Auf-Ab-Richtung des Fahrzeugs unterhalb des Sitzes (5) angeordnet ist und mit einem Abschnitt (14a) des ersten Sitzrahmens (14) überlappt, wenn das Fahrzeug von der Seite betrachtet wird.

11. Das Motorroller-Typ-Fahrzeug (1) gemäß irgendeinem der Ansprüche 1 bis 10, **dadurch gekennzeichnet, dass** die Antriebseinheit (50) einen Verbrennungsmotor (52) enthält;
das Motorroller-Typ-Fahrzeug (1) ein Hinterrad (9) enthält, das in Bezug auf die Schwenkwelle (30) in Vorder-Rück-Richtung des Fahrzeugs nach hinten angeordnet ist;
das Motorroller-Typ-Fahrzeug (1) ein Abgasrohr (54) enthält, das mit dem Verbrennungsmotor (52) verbunden ist;
das Abgasrohr (54) einen seitlichen Abschnitt (54b) enthält, der in Links-Rechts-Richtung des Fahrzeugs seitlich vom Hinterrad (9) angeordnet ist; und
der erste untere Rahmen (13), der erste Sitzrahmen (14) und der seitliche Abschnitt (54b) des Abgasrohrs (54) entweder auf einer rechten oder einer linken Seite einer Fahrzeugmittellinie (CL) in Links-Rechts-Richtung des Fahrzeugs angeordnet sind.

12. Das Motorroller-Typ-Fahrzeug (1) gemäß irgendeinem der Ansprüche 1 bis 10, **dadurch gekennzeichnet, dass** der Körperrahmen (10) einen zweiten unteren Rahmen (15A), der sich von dem Unter-Rahmen (12) nach hinten in Vorder-Rück-Richtung des Fahrzeugs erstreckt, und einen zweiten Sitzrahmen (15B), der sich nach hinten in Vorder-Rück-Richtung des Fahrzeugs und nach oben von dem zweiten unteren Rahmen (15A) in Auf-Ab-Richtung des Fahrzeugs erstreckt, enthält;
der erste untere Rahmen (13) und der erste Sitzrahmen (14) entweder auf einer rechten oder einer linken Seite der Fahrzeugmittellinie (CL) in Links-Rechts-Richtung des Fahrzeugs angeordnet sind;
der zweite untere Rahmen (15A) und der zweite Sitzrahmen (15B) auf der jeweils anderen Seite der rechten und linken Seite der Fahrzeugmittellinie (CL) in Links-Rechts-Richtung des Fahrzeugs angeordnet sind; und
der zweite untere Rahmen (15A) und der zweite Sitzrahmen (15B) als integraler Teil durch einen einzigen Rahmen (15) gebildet sind.

13. Das Motorroller-Typ-Fahrzeug (1) gemäß Anspruch 12, **dadurch gekennzeichnet, dass** die Antriebseinheit (50) einen Verbrennungsmotor (52) und ein Getriebe (55) enthält;
das Motorroller-Typ-Fahrzeug (1) ein Hinterrad (9) enthält, das in Bezug auf die Schwenkwelle (30) in Vorder-Rück-Richtung des Fahrzeugs nach hinten angeordnet ist;
das Motorroller-Typ-Fahrzeug (1) ein Abgasrohr (54) enthält, das mit dem Verbrennungsmotor (52) verbunden ist;
das Abgasrohr (54) einen seitlichen Abschnitt (54b) enthält, der in Links-Rechts-Richtung des Fahrzeugs seitlich vom Hinterrad (9) angeordnet ist;
der erste untere Rahmen (13), der erste Sitzrahmen (14) und der seitliche Abschnitt (54b) des Abgasrohrs (54) entweder auf der rechten Seite oder auf der linken Seite der Fahrzeugmittellinie (CL) in Links-Rechts-Richtung des Fahrzeugs angeordnet sind; und
der zweite untere Rahmen (15A), der zweite Sitzrahmen (15B) und das Getriebe (55) auf der jeweils anderen Seite der rechten und linken Seite der Fahrzeugmittellinie (CL) in Links-Rechts-Richtung des Fahrzeugs angeordnet sind.

14. Das Motorroller-Typ-Fahrzeug (1) gemäß irgendeinem der Ansprüche 1 bis 13, **gekennzeichnet durch** ein Ventilator (56) zur Kühlung der Antriebseinheit (50),
wobei der erste untere Rahmen (13), der erste Sitzrahmen (14) und dar Ventilator (56) entweder auf einer rechten Seite oder einer linken Seite der Fahrzeugmittellinie (CL) in Links-Rechts-Richtung des Fahrzeugs angeordnet sind.

## Revendications

1. Véhicule de type scooter (1) comprenant :
un cadre (10) incluant un tube de fourche (11), un cadre vers le bas (12) s'étendant vers le bas depuis le tube de fourche (11), un premier cadre inférieur (13 constitué d'un tube s'étendant vers l'arrière dans la direction avant arrière du véhicule depuis le cadre vers le bas (12), ainsi qu'un premier cadre de siège (14) s'étendant vers l'arrière dans la direction avant arrière du véhicule et vers le haut depuis le premier cadre inférieur (13) dans la direction haut bas du véhicule,
un siège (5) disposé en haut du premier cadre de siège (14),
un marchepied (20) disposé en avant du siège (5) dans la direction avant arrière du véhicule et en haut du premier cadre inférieur (13) dans la direction haut bas du véhicule, le marchepied (20) étant configuré pour faire reposer les pieds d'un pilote assis sur le siège (5),
un arbre de pivot (30) fixé au premier cadre inférieur (13) ou au premier cadre de siège (14), et
une unité de puissance (50) supportée pour pouvoir pivoter sur l'arbre de pivot (30), où :
le premier cadre inférieur (13) et le premier cadre de siège (14) sont formés comme des composants séparés,
le premier cadre inférieur (13) inclut un organe principal de raccordement (131) relié à une surface terminale inférieure du premier cadre de siège (14) et une extension arrière (135) située en arrière dans la direction avant arrière du véhicule par rapport à l'organe principal de raccordement (131), l'extrémité inférieure (135b) du bord arrière (135a) de l'extension arrière (135) étant située à l'avant dans la direction avant arrière du véhicule par rapport à l'extrémité supérieure (135t) du bord arrière (135a) de l'extension arrière (135), **caractérisé en ce que** le véhicule de type scooter inclut un élément de renforcement interne (17) qui est disposé à l'intérieur du premier cadre inférieur (13) et à l'arrière par rapport à l'extrémité avant (131f) de l'organe principal de raccordement (131) dans la direction avant arrière du véhicule.

2. Véhicule de type scooter (1) selon la revendication 1, **caractérisé en ce que** l'extrémité inférieure (135b) du bord arrière (135a) de l'extension arrière (135) est située en avant par rapport à un plan virtuel (135p) dans la direction avant arrière du véhicule, qui passe au travers de l'extrémité supérieure (135t) du bord arrière (135a) de l'extension arrière (135) et est perpendiculaire à une droite axiale (13c) du premier cadre inférieur (13).

3. Véhicule de type scooter (1) selon la revendication 1 ou la revendication 2, **caractérisé en ce que,** lorsque le véhicule est visualisé depuis le côté, le bord arrière (135a) de l'extension arrière (135) est incliné vers le haut par rapport à une droite horizontale (PL) dans la direction haut bas du véhicule tout en s'étendant vers l'arrière dans la direction avant arrière du véhicule.

4. Véhicule de type scooter (1) selon l'une quelconque des revendications 1 à 3, **caractérisé en ce que** le diamètre externe (D14) du premier cadre de siège (14) est plus petit que le diamètre externe (D13) du premier cadre inférieur (13) .

5. Véhicule de type scooter (1) selon l'une quelconque des revendications 1 à 4, **caractérisé en ce que** le premier cadre de siège (14) est constitué d'un tube dont l'épaisseur de paroi est inférieure à celle du tube du premier cadre inférieur (13).

6. Véhicule de type scooter (1) selon l'une quelconque des revendications 1 à 5, **caractérisé par** un élément arrière de renforcement (16) relié à une partie du premier cadre inférieur (13) qui se trouve à l'arrière de l'organe principal de raccordement (131) dans la direction avant arrière du véhicule ainsi qu'au premier cadre de siège (14).

7. Véhicule de type scooter (1) selon la revendication 6, **caractérisé en ce que** l'extension arrière (135) du premier cadre inférieur (13) inclut un organe arrière de raccordement (132) relié à l'élément arrière de renforcement (16), et
l'extrémité inférieure (135b) du bord arrière (135a) de l'extension arrière (135) est située en avant par rapport à l'extrémité arrière (132r) de l'organe arrière de raccordement (132) dans la direction avant arrière du véhicule.

8. Véhicule de type scooter (1) selon l'une quelconque des revendications 1 à 7, **caractérisé par** un élément avant de renforcement (19) relié à une partie du premier cadre inférieur (13) qui se trouve à l'avant de l'organe principal de raccordement (131) dans la direction avant arrière du véhicule ainsi qu'au premier cadre de siège (14).

9. Véhicule de type scooter (1) selon l'une quelconque des revendications 1 à 8, **caractérisé en ce que** le centre (30c) de l'arbre de pivot (30) est situé à l'arrière par rapport à l'extrémité arrière (131r) de l'organe principal de raccordement (131) du premier cadre inférieur (13) dans la direction avant arrière du véhicule.

10. Véhicule de type scooter (1) selon l'une quelconque des revendications 1 à 9, **caractérisé par** un casier de stockage (32) qui est disposé sur le bas du siège (5) dans la direction haut bas du véhicule et chevauche une partie (14a) du premier cadre de siège (14) lorsque le véhicule est visualisé depuis le côté.

11. Véhicule de type scooter (1) selon l'une quelconque des revendications 1 à 10, **caractérisé en ce que** l'unité de puissance (50) inclut un moteur à combustion interne (52),
le véhicule de type scooter (1) inclut une roue arrière (9) disposée à l'arrière par rapport à l'arbre de pivot (30) dans la direction avant arrière du véhicule,
le véhicule de type scooter (1) inclut un tuyau d'échappement (54) raccordé au moteur à combustion interne (52),
le tuyau d'échappement (54) inclut une partie latérale (54b) disposée sur le côté de la roue arrière (9) dans la direction gauche droite du véhicule, et
le premier cadre inférieur (13), le premier cadre de siège (14) et la partie latérale (54b) du tuyau d'échappement (54) sont disposés sur l'un du côté droit et du côté gauche de l'axe central du véhicule (CL) dans la direction gauche droite du véhicule.

12. Véhicule de type scooter (1) selon l'une quelconque des revendications 1 à 10, **caractérisé en ce que** le cadre (10) inclut un second cadre inférieur (15A) s'étendant vers l'arrière depuis le cadre vers le bas (12) dans la direction avant arrière du véhicule et un second cadre de siège (15B) s'étendant vers l'arrière dans la direction avant arrière du véhicule et vers le haut depuis le second cadre inférieur (15A) dans la direction haut bas du véhicule,
le premier cadre inférieur (13) et le premier cadre de siège (14) sont disposés sur l'un du côté droit et du côté gauche de l'axe central du véhicule (CL) dans la direction gauche droite du véhicule,
le second cadre inférieur (15A) et le second cadre de siège (15B) sont disposés sur l'autre du côté droit et du côté gauche de l'axe central du véhicule (CL) dans la direction gauche droite du véhicule, et
le second cadre inférieur (15A) et le second cadre de siège (15B) sont façonnés sous forme d'une seule pièce grâce à un unique cadre (15).

13. Véhicule de type scooter (1) selon la revendication 12, **caractérisé en ce que** l'unité de puissance (50) inclut un moteur à combustion interne (52) et une transmission (55),
le véhicule de type scooter (1) inclut une roue arrière (9) disposée à l'arrière par rapport à l'arbre de pivot (30) dans la direction avant arrière du véhicule,
le véhicule de type scooter (1) inclut un tuyau d'échappement (54) raccordé au moteur à combustion interne (52),
le tuyau d'échappement (54) inclut une partie latérale (54b) disposée sur le côté de la roue arrière (9) dans la direction gauche droite du véhicule,
le premier cadre inférieur (13), le premier cadre de siège (14) et la partie latérale (54b) du tuyau d'échappement (54) sont disposés sur l'un du côté droit et du côté gauche de l'axe central du véhicule (CL)) dans la direction gauche droite du véhicule, et
le second cadre inférieur (15A), le second cadre de siège (15B) et la transmission (55) sont disposés sur l'autre du côté droit et du côté gauche de l'axe central du véhicule (CL) dans la direction gauche droite du véhicule.

14. Véhicule de type scooter (1) selon l'une quelconque des revendications 1 à 13, **caractérisé par** un ventilateur (56) destiné à refroidir l'unité de puissance (50),
dans lequel le premier cadre inférieur (13), le premier cadre de siège (14) et le ventilateur (56) sont disposés sur l'un du côté droit et du côté gauche de l'axe central du véhicule (CL)) dans la direction gauche droite du véhicule.
